# EUROPEAN PATENT SPECIFICATION

(11) **EP 3 798 371 B1**
(45) Date of publication and mention of the grant of the patent: **12.07.2023**
(21) Application number: 19199812.9
(22) Date of filing: 26.09.2019
(51) Int. Cl.: E02F 9/22, F16L 3/223, F16L 39/02, F16L 3/12, F16L 3/20, F16L 3/18

(54) **HOSE CONNECTION SYSTEM**
SCHLAUCHVERBINDUNGSSYSTEM
SYSTÈME DE CONNEXION DE TUYAU

(43) Date of publication of application: 31.03.2021
(73) Proprietor: Deere & Company, Moline, IL 61265 (US)
(72) Inventor: Jokinen, Jarkko, 68163 Mannheim (DE); Suutari, Marko, 68163 Mannheim (DE); Ketola, Ari-Pekka, 68163 Mannheim (DE)
(74) Representative: Lavall, Christian Henner

(56) References cited:
- EP-A2- 2 392 737
- EP-A2- 2 578 915
- KR-A- 20180 104 431

## Description

The present invention concerns hose connection system, particular for felling and/or processing logs and a working vehicle with such a system.

Mobile work machines, in particular, forestry equipment and forestry machines, e.g. harvesters and forwarders, have an articulated boom or crane and a tree stem processing tool at the tip of the boom. The crane is used to move the tool and the tree log. Further, the crane provides space for hydraulic lines used to power the tool at the tip of the crane. The tool can be e.g. a harvester head, a felling head, a harvesting and processing head, or a log grapple equipped with a sawing apparatus. The tool can be used e.g. to cut standing trees, to process felled trees or to grab objects, such as logs or tree stems. When using such a tool with power-driven operations, it is operated under the control of an operator of the work machine.

The mobile work machines comprise an articulated crane with the tool attached to a boom tip of the crane. Such tools handle heavy load, that may comprise a load of soil or logs or raw material. Usually such cranes are controlled by hydraulic actuators that are driven by hydraulic pressure from one or more pumps. The pumps are usually powered by the primary power source of the vehicle.

The stem processing tool or harvester tool comprises several movable knives that are used to grab the log/tree with the harvester tool. These knives are hydraulically actuated and controlled by the controller mounted on the harvester tool. Once the tree is grabbed with the harvester tool, a saw blade, usually at a bottom side of the harvester tool, is activated to cut the tree/stem. After the cutting process the tree will fall over, only being fixated in the harvester tool by the knives closed around the stem. Usually, within the harvester tool, feeding wheels are activated to pull/push the stem through the harvester tool and the knives, so that bark/branches are removed, and the log/stem is cut up into log pieces of determined size.

During use the crane continuously works and moves to handle the trees or felled logs or stems. A typical crane usually comprises of multiple connected arms and a jib which holds the tool. The arms are also connected to hydraulic actuators to move the arms relative to each other and to the base working machine. The hydraulic actuators which are also provided in the tool require constant feed with hydraulic power and are thus connected to the hydraulic pump of the vehicle by lines or hoses. The hoses run along the arms and the jib of the crane and have determined linkages via fittings at advantageous maintenance locations where they can be easily inspected and - if necessary - replaced or repaired.

The hydraulic lines or hoses are under a constant strain due to movement of the arms, turning of the crane and the inside hydraulic pressure. Additional strain is applied by high or low temperatures.

The connecting points of hydraulic lines, the fittings are usually held in a fixation on the crane, so that the hydraulic lines have a free length from one connection to the next. Thus, the ability for torque twist is limited by the free length of the hydraulic lines. Connection fittings for hydraulic lines are known from EP2578915A2, EP2392737A2 or KR20180104431A.

US8950538 discloses a fixture in which a hose is held in a movable state, surrounded by a bushing.

On the other side, extending the hydraulic lines lead to a higher maintenance and higher wear on the hydraulic lines.

It is thus necessary to find a solution which enables work efficient maintenance locations of the fittings, higher torque resistance of the hydraulic lines and easy access of the fittings. One invention is a hose connecting system, which comprises at least two hoses, adapted to be connected to each other, a fitting, adapted to fixedly hold each of the hoses, and realize the fluid connection of the hoses, a holder, adapted to hold the fitting, so that the fitting is able to rotate around a longitudinal axis of the hoses and/or move along a longitudinal axis of the hoses and/or move along an axis orthogonal to the longitudinal axis of the hoses, when the holder holds the fitting.

The hoses are fixed to the fitting and the fitting itself is movably held inside the holder. This enables to have the maintenance locations at the fitting, yet, at the same time to increase the available length of the hoses for twist and lateral movement. Thus, the strain on the hoses connected to the fitting are reduced and increase the lifetime and ability to prevent loosening of the hoses from the fitting.

In a further embodiment of the invention, the fitting has a first connection part, adapted to hold a hose, and a second connection part, adapted to hold a hose, and a middle part, connecting the first and second connection part, and wherein the middle part is elongated in the longitudinal direction of the hoses.

The middle part is elongated so that it can be easily inserted in the holder for fixation. The hoses can be crimped to the first and second connection part of the fitting. This allows to separate the middle part being available for movement and twisting inside the holder. The hoses and the crimped areas are well separated from the middle part, increasing the reliability of the fitting and the hose connections.

In another embodiment of the invention the cross-section of the middle part of the fitting has a circular shape.

The circular shape allows the free rotation of the middle part inside the holder as well as minor axial movement in the longitudinal direction of the hoses to compensate length changes of the hoses due to movement or twisting.

In a further embodiment of the invention the cross section of the middle part of the fitting has a rectangular shape.

The rectangular shape allows lateral movement when the holder provides a long hole to facilitate that movement. In such a case the fitting can move sideways, that is along an axis orthogonal to the longitudinal axis of the hoses. A twisting movement is prevented, but the sideways movement can be used to compensate for movement of the hoses.

In another embodiment of the invention the holder is adapted to be fitted to a crane.

The use of the holder and the hose connecting system on a crane, preferably on a working vehicle leads to a longer lifetime of the hoses and improved maintenance locations.

In a further embodiment of the invention the holder comprises of a base part and a cover part.

The base part can be fixed to any surface, such as a crane arm, wherein the hose is held in place between the base part and the cover part, which is removably fixed to the base part.

In another embodiment of the invention the hose connecting system comprises an additional bushing, adapted to be placed between the fitting and the holder, so that the bushing acts as a bearing element.

The bushing along the middle part enables to reduce friction between the middle part and the holder so that twisting linear movement are further supported. This also leads to less wear of the parts involved and further reduces the strain on the hoses.

In a further embodiment of the invention the system comprises at least a bearing between the fitting and the holder.

The bearing further reduces frictional forces between the middle part and the holder.

In another embodiment of the invention the bushing comprises PTFE.

PTFE reduces the frictional forces between the middle part and the holder and can offer a sealing function.

In a further embodiment of the invention the fitting and the holder are adapted to limit the translational movement in the longitudinal direction within the holder.

The first and second connection part of the fitting can have a greater diameter that the holder. Thus, the first and second connection part will work as an end stop, when the middle part is fixed by the holder, limiting the axial travel. This can be used to limit strain on the hoses during movement.

Another invention is a hydraulic crane for a working vehicle comprising a hose connecting system, which further comprises at least two hoses, adapted to be connected to each other, a fitting, adapted to fixedly hold each of the hoses, a holder, adapted to hold the fitting, so that the fitting is able to rotate around a longitudinal axis and/or move along a longitudinal axis and/or move along an axis orthogonal to the longitudinal axis, when the holder holds the fitting.

The hoses are fixed to the fitting and the fitting itself is movably held inside the holder. This enables to have the maintenance locations at the fitting, yet, at the same time to increase the available length of the hoses for twist and lateral movement. Thus, the strain on the hoses connected to the fitting are reduced and increase the lifetime and ability to prevent loosening of the hoses from the fitting. The use of the holder and the hose connecting system on a crane, preferably on a working vehicle leads to a longer lifetime of the hoses and improved maintenance locations.

The invention is further described in Figures 1 to 4.
Fig. 1 shows an embodiment of the invention;
Fig. 2 depicts an arrangement of another embodiment of the invention;
Fig. 3 shows a different embodiment of the invention;
Fig. 4 depicts a cut view of an embodiment of the invention.

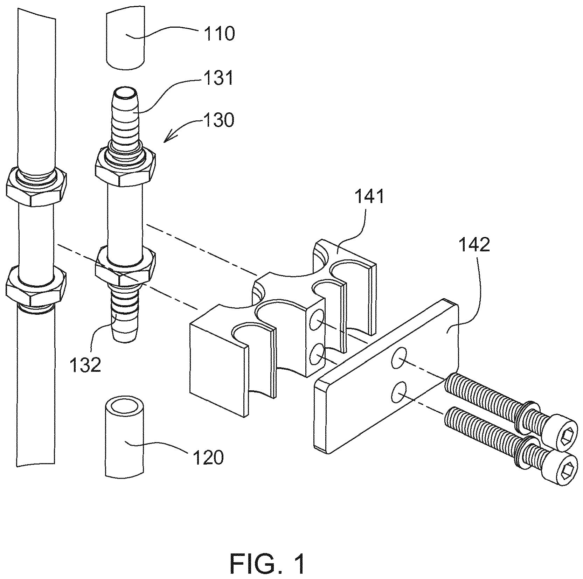

In Figure 1 the hose connecting system 100 is shown in an exploded view and an assembled state. The hoses 110, 120 are connected to the fitting by the first and second connection part 131, 132. The hoses 110, 120 can be crimped, wherein there can be additional elements pressing the hoses 110, 120 to the first and second connection part 131, 132 in the crimped state, which is not shown. The crimping is usually supported by a crimping machine. The hoses 110, 120 are applied to the first and second connection parts 131, 132 and then inserted in the crimping machine which by force deforms the material of the first and second connection part 131, 132 so that the connection of the hoses 110, 120 is secured by the deformed material. Nevertheless, repetitive stress and temperature influences can still loosen a common crimping connection. Usually the fitting is fixed to a holder 140 and fixed in one holding position, so that the forces applied to the hoses 110, 120 during application are affecting the hose connection and the holder-fitting connection so that these may become loose over time.

The fitting with the connected hoses 110, 120 is then placed inside a holder 140 which has openings in circular shape. As the fittings middle part 133 also is provided with a round shape, both parts can glide easily and thus the fitting with the hoses 110, 120 is able to rotate inside the holder base part 141 and the cover part 142. The cover part 142 is preferably fixed with screws to the base part 141, yet, also other designs are possible, such as a riveting fixation or straps. In the fixed or closed holder state, the fitting is able to undergo twisting movement in the supported state. When the working machine is moving and the hydraulic hoses 110, 120 are moved, e.g. bend, twisted, elongated, the fitting can move to a certain degree in the lengthwise direction of the hoses 110, 120 but most importantly can twist together with the hoses 110, 120 so that the twistable length of one hose is extended to include the connected hose. This reduces the torque applied on the hoses and increases lifetime and durability of the hose-fitting-hose connection. It is also superior to a single hose, as the fitting connection allows for shorter hoses and better maintenance and exchangeability of the components.

In another version the middle part 133 of the fitting may be covered by an additional bushing 150 which can serve as a bearing surface between the holder 140 surface and the middle part 133. This further reduces friction and facilitates the twisting and elongation motion.

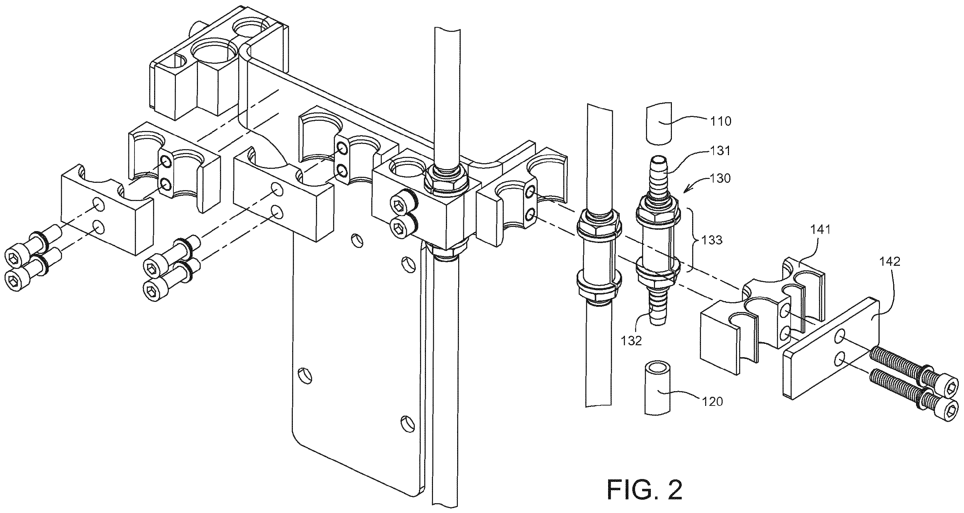

Figure 2 shows an arrangement of multiple hose connecting systems 100 on a crane part. A usual hydraulic application requires multiple hydraulic lines and hoses 110, 120 so that a space saving packaging is of high advantage. The hose connecting systems 100 are shown as being side-by side, yet, also a higher packaging rate, e.g. a 2x2 matrix of holders 140 is only one variation possible. The hoses 110, 120 are able to twist inside the holders 140 without hindering the adjoining hoses.

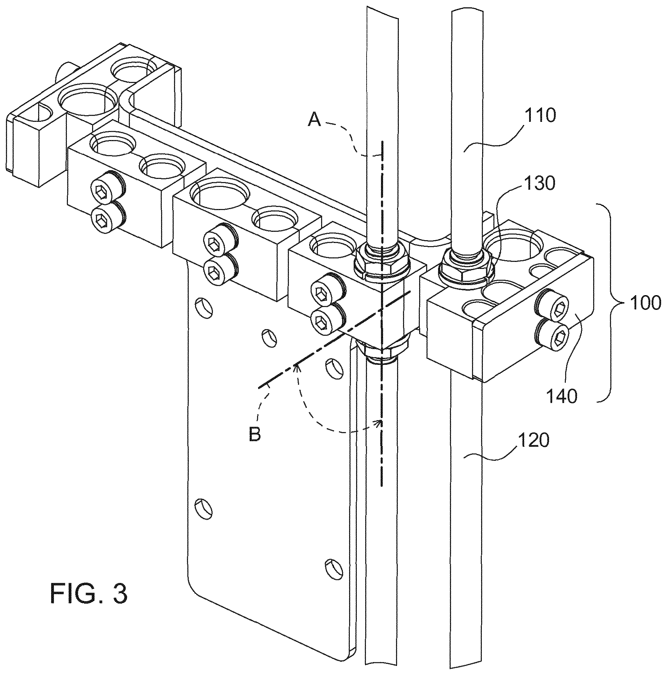

Figure 3 shows another embodiment. It is visible that axis A is in the direction of the hoses 110, 120 or a lengthwise direction. Due to the design of the fitting and the first and second connection parts 131, 132, the fitting is establishing an end stop together with the outer surfaces of the holder 140. In this way, the length of the middle part 133 of the fitting is used to set a lengthwise travel for the fitting inside the holder 140 and limits the displacement.

In case the holder 140 has an elongated hole for the fitting in an orthogonal direction B of the axis A, the holder 140 also enables the fitting to have a sideways movement, further reducing strain on the hoses 110, 120 during use.

Also, the holder 140 can have a rectangular opening, as well as the middle part 133 of the fitting having a rectangular cross section. The middle part 133 can slide in a lengthwise direction by limiting any twist movement. This can be advantageous if any twisting movement of the hoses 110, 120 is not occurring, but a larger axial lengthwise movement is expected.

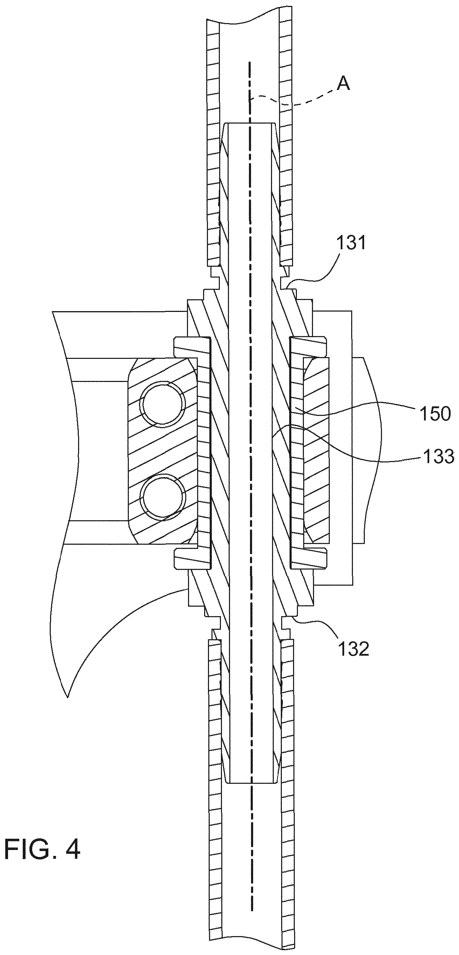

Figure 4 shows a cross cut section view of another embodiment. The middle part 133 of the fitting is extended in a lengthwise direction and surrounded by a bushing 150. The fitting and the bushing 150 are being movably held inside the holder 140 between a base part 141 and a cover part 142. The number of hose connections can be increase to the available space requirements without further changes to the crane or working machine. This system is advantageous for outfitting or refitting machines to increase the maintenance intervals and reduce the hose failure risks.

## Claims

1. Hose connecting system (100), comprising
at least two hoses (110, 120), adapted to be connected to each other,
a fitting (130), adapted to fixedly hold each of the hoses (110, 120), and realize the fluid connection of the hoses,
a holder (140), adapted to hold the fitting (130),
wherein the holder (140) holds at least two fittings (130),
and, when the holder (140) holds the fitting (130) in a connected state,
the fitting is able to move along an axis orthogonal (B) to the longitudinal axis (A) of the hoses (110, 120),
**characterized in that** the fitting (130) is able to rotate around a longitudinal axis (A) of the hoses (110, 120) and/or move along a longitudinal axis (A) of the hoses (110, 120).

2. Hose connecting system (100) according to claim 1, wherein the fitting (130) has a first connection part (131), adapted to hold a hose (110, 120), and a second connection part (132), adapted to hold a hose (110, 120), and a middle part (133), connecting the first and second connection part (131, 132), and
wherein the middle part (133) is elongated in the longitudinal direction (A) of the hoses (110, 120).

3. Hose connecting system (100) according to one of the previous claims, wherein the cross-section of the middle part (133) of the fitting (130) has a circular shape.

4. Hose connecting system (100), according to claims 1 or 2, wherein the cross section of the middle part (133) of the fitting (130) has a rectangular shape.

5. Hose connecting system (100) according to any of the previous claims, wherein the holder (140) is adapted to be fitted to a crane.

6. Hose connecting system (100) according to any of the previous claims, wherein the holder (140) comprises of a base part (141) and a cover part (142).

7. Hose connecting system (100) according to any of the previous claims, wherein the system comprises an additional bushing (150), adapted to be placed between the fitting (130) and the holder (140), so that the bushing (150) acts as a bearing element.

8. Hose connecting system (100) according to any of the previous claims 1 to 6, wherein the system comprises at least a bearing between the fitting (130) and the holder (140).

9. Hose connecting system (100) according to claim 7, wherein the bushing (150) comprises PTFE.

10. Hose connecting system (100) according to any of the previous claims, wherein the fitting (130) and the holder (140) are adapted to limit the translational movement in the longitudinal direction (A) within the holder (140).

11. Hydraulic crane for a working vehicle comprising a hose connecting system (100), according to claim 1.

## Patentansprüche

1. Schlauchverbindungssystem (100), umfassend
mindestens zwei Schläuche (110, 120), die dazu angepasst sind, miteinander verbunden zu werden,
ein Verbindungsstück (130), das dazu angepasst ist, jeden der Schläuche (110, 120) fest zu halten und die Fluidverbindung der Schläuche herzustellen,
eine Halterung (140), die dazu angepasst ist, das Verbindungsstück (130) zu halten,
wobei die Halterung (140) mindestens zwei Verbindungsstücke (130) hält,
und, wenn die Halterung (140) das Verbindungsstück (130) in einem verbundenen Zustand hält, das Verbindungsstück sich entlang einer Achse orthogonal (8) zur Längsachse (A) der Schläuche (110, 120) bewegen kann,
**dadurch gekennzeichnet, dass** sich das Verbindungsstück (130) um eine Längsachse (A) der Schläuche (110, 120) drehen und/oder sich entlang einer Längsachse (A) der Schläuche (110, 120) bewegen kann.

2. Schlauchverbindungssystem (100) gemäß Anspruch 1, wobei das Verbindungsstück (130) ein erstes Verbindungsteil (131), das zum Halten eines Schlauchs (110, 120) angepasst ist, und ein zweites Verbindungsteil (132), das zum Halten eines Schlauchs (110, 120) angepasst ist, und ein Mittelteil (133) aufweist, das das erste und zweite Verbindungsteil (131, 132) verbindet, und
wobei sich das Mittelteil (133) in Längsrichtung (A) der Schläuche (110, 120) erstreckt.

3. Schlauchverbindungssystem (100) gemäß einem der vorhergehenden Ansprüche, wobei der Querschnitt des Mittelteils (133) des Verbindungsstücks (130) eine Kreisform aufweist.

4. Schlauchverbindungssystem (100) gemäß Anspruch 1 oder 2, wobei der Querschnitt des Mittelteils (133) des Verbindungsstücks (130) eine rechteckige Form aufweist.

5. Schlauchverbindungssystem (100) gemäß einem der vorhergehenden Ansprüche, wobei die Halterung (140) dazu angepasst ist, an einen Kran angebracht zu werden.

6. Schlauchverbindungssystem (100) gemäß einem der vorhergehenden Ansprüche, wobei die Halterung (140) aus einem Basisteil (141) und einem Deckelteil (142) besteht.

7. Schlauchverbindungssystem (100) gemäß einem der vorhergehenden Ansprüche, wobei das System eine zusätzliche Buchse (150) umfasst, die dazu angepasst ist, zwischen dem Verbindungsstück (130) und der Halterung (140) angeordnet zu werden, sodass die Buchse (150) als Lagerelement wirkt.

8. Schlauchverbindungssystem (100) gemäß einem der vorhergehenden Ansprüche 1 bis 6, wobei das System mindestens ein Lager zwischen dem Verbindungsstück (130) und der Halterung (140) umfasst.

9. Schlauchverbindungssystem (100) gemäß Anspruch 7, wobei die Buchse (150) aus PTFE besteht.

10. Schlauchverbindungssystem (100) gemäß einem der vorhergehenden Ansprüche, wobei das Verbindungsstück (130) und die Halterung (140) dazu angepasst sind, die Translationsbewegung in Längsrichtung (A) innerhalb der Halterung (140) zu begrenzen.

11. Hydraulischer Kran für ein Arbeitsfahrzeug, umfassend ein Schlauchverbindungssystem (100) gemäß Anspruch 1.

## Revendications

1. Système de raccordement de tuyau (100), comprenant
au moins deux tuyaux (110, 120) conçus pour être raccordés l'un à l'autre,
une pièce de fixation (130), conçue pour retenir à demeure chacun des tuyaux (110, 120) et réaliser le raccord hydraulique des tuyaux,
un support (140), conçu pour retenir la pièce de fixation (130),
dans lequel le support (140) retient au moins deux pièces de fixation (130),
et, lorsque le support (140) retient la pièce de fixation (130) dans un état raccordé,
la pièce de fixation peut se déplacer le long d'un axe orthogonal (B) à l'axe longitudinal (A) des tuyaux (110, 120),
**caractérisé en ce que** la pièce de fixation (130) peut tourner autour d'un axe longitudinal (A) des tuyaux (110, 120) et/ou se déplacer le long d'un axe longitudinal (A) des tuyaux (110, 120).

2. Système de raccordement de tuyau (100) selon la revendication 1, dans lequel la pièce de fixation (130) a une première partie de raccordement (131), conçue pour retenir un tuyau (110, 120) et une seconde partie de raccordement (132) conçue pour retenir un tuyau (110, 120) et une partie intermédiaire (133), reliant les première et seconde parties de raccordement (131, 132), et
dans lequel la partie intermédiaire (133) est allongée dans la direction longitudinale (A) des tuyaux (110, 120).

3. Système de raccordement de tuyau (100) selon l'une des revendications précédentes, dans lequel la section transversale de la partie intermédiaire (133) de la pièce de fixation (130) présente une forme circulaire.

4. Système de raccordement de tuyau (100) selon l'une des revendications 1 ou 2, dans lequel la section transversale de la partie intermédiaire (133) de la pièce de fixation (130) présente une forme rectangulaire.

5. Système de raccordement de tuyau (100) selon l'une des revendications précédentes, dans lequel le support (140) est conçu pour être fixé sur une grue.

6. Système de raccordement de tuyau (100) selon l'une des revendications précédentes, dans lequel le support (140) comprend une partie de base (141) et une partie couvercle (142).

7. Système de raccordement de tuyau (100) selon l'une des revendications précédentes, dans lequel le système comprend un palier supplémentaire (150), conçu pour être placé entre la pièce de fixation (130) et le support (140), de sorte que le palier (150) joue le rôle d'élément de palier.

8. Système de raccordement de tuyau (100) selon l'une des revendications 1 à 6, dans lequel le système comprend au moins un palier entre la pièce de fixation (130) et le support (140).

9. Système de raccordement de tuyau (100) selon la revendication 7, dans lequel le palier (150) comprend du PTFE.

10. Système de raccordement de tuyau (100) selon l'une des revendications précédentes, dans lequel la pièce de fixation (130) et le support (140) sont conçus pour limiter le déplacement en translation dans la direction longitudinale (A) à l'intérieur du support (140).

11. Grue hydraulique pour un véhicule de travail comprenant un système de raccordement de tuyau (100) selon la revendication 1.
